# FASCICULE DE BREVET EUROPEEN

(11) **EP 0 540 800 B1**
(45) Date de publication et mention de la délivrance du brevet: **05.06.1996**
(21) Numéro de dépôt: 91810852.3
(22) Date de dépôt: 04.11.1991
(51) Int. Cl.: A61C 17/02

(54) **Porte-buse pour soins corporels**
Handstück mit Düse zur Körperpflege
Nozzle handpiece for body care

(43) Date de publication de la demande: 12.05.1993
(73) Titulaire: LES PRODUITS ASSOCIES L.P.A. BROXO S.A., CH-1225 Chene-Bourg (CH)
(72) Inventeur: Jousson, Jean-Pierre, CH-1207 Genève (CH)
(74) Mandataire: Jörchel, Dietrich R.A.

(56) Documents cités:
- EP-A- 0 339 770
- CH-A- 266 506
- DE-A- 3 231 537

## Description

L'invention concerne un porte-buse pour soins corporels, notamment buccaux, au moyen d'un jet de liquide pulsé, formé par un boitier-poignée comprenant un conduit de liquide entre un raccord d'entrée et un raccord de sortie destiné à la fixation d'une buse, ainsi qu'une valve installée dans ce conduit et comportant un bouton de commande qui, à l'état de repos, assure l'ouverture de la valve et qui peut être pressé pour diminuer le passage de liquide et, dans sa position pressée finale, fermer la valve.

Des porte-buses de ce type, qui sont alimentés par une pompe hydraulique par l'intermédiaire d'un tuyau, permettent à l'utilisateur d'interrompre temporairement le passage du liquide par simple pression du bouton qui est disposé à la périphérie du boîtier-poignée. Cette mesure permet notamment à l'utilisateur de changer la buse sans qu'il soit nécessaire d'arrêter la pompe et devoir ensuite la remettre en marche, ce qui est beaucoup plus pratique.

Un porte-buse tel que mentionné ci-dessus est connu, par exemple, des brevets CH-A 657 265 (= DE-A-3231537, formant le préambule de la revendication 1) ou 658 182 et comporte une valve qui interrrompt simplement le passage du liquide quand le bouton est pressé. Cette interruption est réalisée soit par compression du conduit constitué par un tuyau interne souple, soit par un organe d'arrêt qui est déplacé à l'intérieur du conduit. Cette interruption du passage du liquide pulsé a l'inconvénient de charger la pompe et son moteur. En effet, la colonne de liquide qui se trouve entre le piston de la pompe et l'organe d'arrêt de la valve est enfermée entre des parois rigides et, sous l'effet des pulsations, elle ne peut pratiquement céder que par des mauvais joints ou grâce à la compression d'éventuelles bulles d'air. Dans certains cas la pompe elle-même peut se bloquer ce qui risque de l'endommager ainsi que le moteur. De toute manière, en position de fermeture de la valve, le conduit d'admission est soumis à des chocs importants dus aux pulsations et qui font vibrer tout l'appareil. A la limite, cela peut même entraîner la détérioration du conduit ou d'une autre pièce.

Le but de la présente invention est de créer une valve telle qu'à l'état de fermeture, la pompe et le moteur sont soulagés par un amortissement des chocs de pression dus aux pulsations.

Ce but est atteint par la clause caractérisante de la revendication 1.

Par ces mesures, à l'état de fermeture de la valve, la colonne de liquide enfermée entre le piston et la valve fermée peut osciller en faisant dilater ladite chambre, ce qui amortit les pulsations.

Selon une forme préférée de l'invention, la chambre est limitée du côté du bouton par une coupelle et du côté opposé par une paroi interne du boîtier dont la zone centrale comporte l'ouverture de la valve, l'extrémité intérieure du bouton se trouvant en contact avec la zone centrale de la face extérieure de la coupelle qui, à l'état de repos, s'appuie contre ce bouton et contre des faces rigides du boîtier et dont la majeure partie, en position de fermeture, est écartée desdites faces; grâce à cet écartement de la coupelle, celle-ci est libre d'être dilatée par les pulsations. De préférence, la coupelle a la forme d'un pot dont le rebord est maintenu dans une rainure de la paroi interne du boîtier, laquelle comporte dans sa zone centrale une collerette entourant ladite ouverture de la valve et servant de siège pour la coupelle dans la position de fermeture de la valve.

L'invention sera décrite à l'aide d'une forme d'exécution en référence aux dessins annexés.

La figure 1 est une coupe longitudinale du portebuse sur lequel une buse est fixée.

La figure 2 est une coupe longitudinale du porte-buse selon la figure 1 tournée à 90° autour de son axe longitudinal.

La figure 3 est une section selon les figures III-III de la figure 1.

La figure 4 est une vue schématique de la valve seule, à l'état de repos, donc en position ouverte.

La figure 5 représente une vue similaire de la figure 4 avec la valve en position fermée.

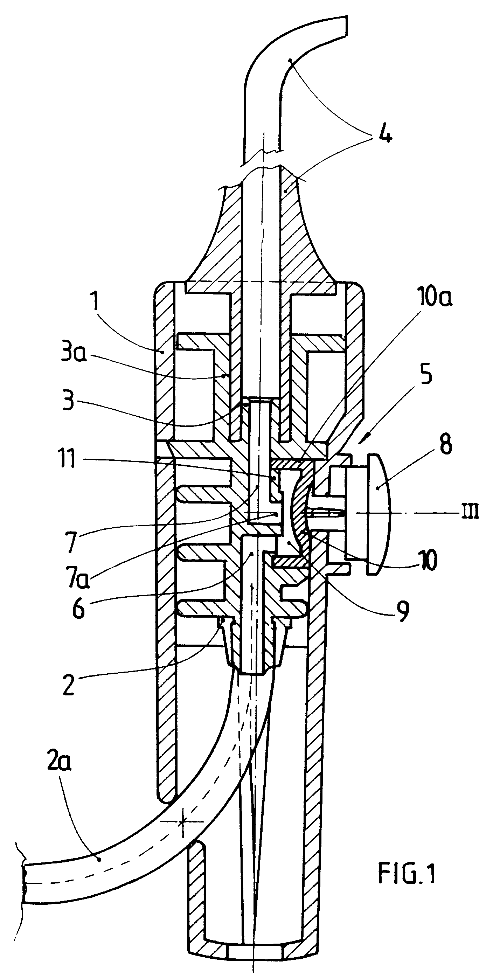

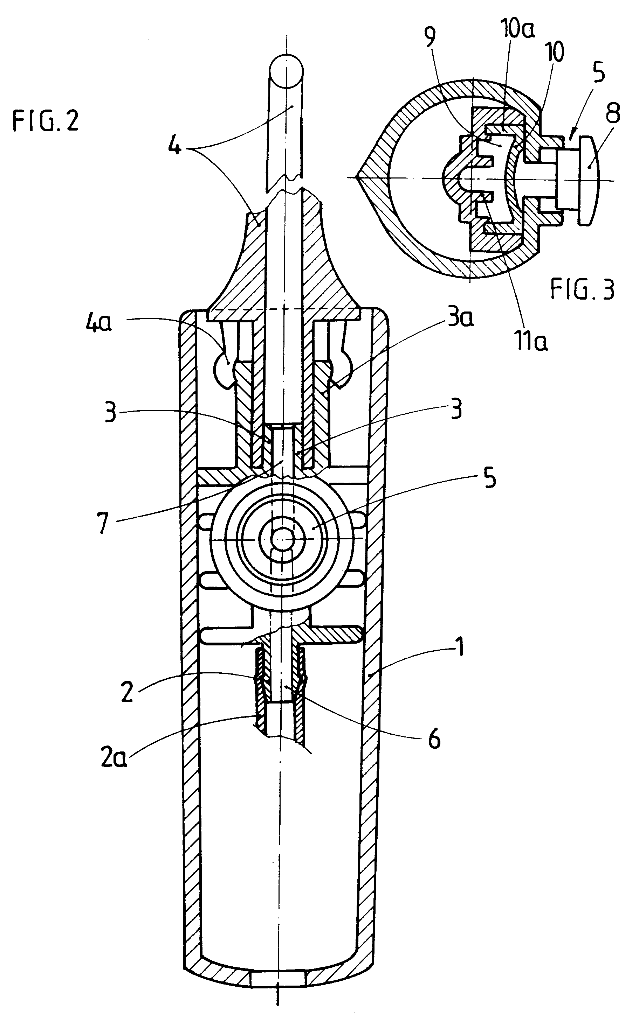

Sur les figures 1 et 2 on voit un porte-buse 1 dont le raccord d'entrée 2 est relié par l'intermédiaire d'un tuyau 2a à une pompe hydraulique, non représentée, qui est entraînée par un moteur également non représenté. Cette pompe crée des pulsations de liquide d'une fréquence de par exemple environ 50 Hz. Une buse 4 est fixée sur le raccord de sortie 3 au moyen des projections internes 3a du porte-buse et des langues élastiques 4a (Fig.2) à l'extrémité inférieure de la buse 4.

Le porte-buse a la forme d'un boîtier-poignée 1 qui comprend un conduit de liquide interne 6, 7 disposé entre le raccord d'entrée 2 et le raccord de sortie 3.

Entre ces deux raccords 2, 3 se trouve une valve 5 comprenant un bouton de commande 8 disposé à la périphérie du boîtier et déplaçable radialement par pression, une chambre 9 en communication permanente avec la partie amont 6 du conduit, ainsi qu'une coupelle élastique 10. La chambre 9 est limitée du côté du bouton par ladite coupelle 10 qui a la forme d'un pot, et de l'autre côté par une paroi interne 11 d'un corps interne du boîtier-poignée 1. Cette paroi 11 présente dans sa zone située en vis-à-vis du bouton 8 une collerette 11a (Figures 3 à 5) entourant l'ouverture 7a de la valve qui est reliée à la partie aval 7 dudit conduit, ladite collerette 11a formant le siège de cette valve.

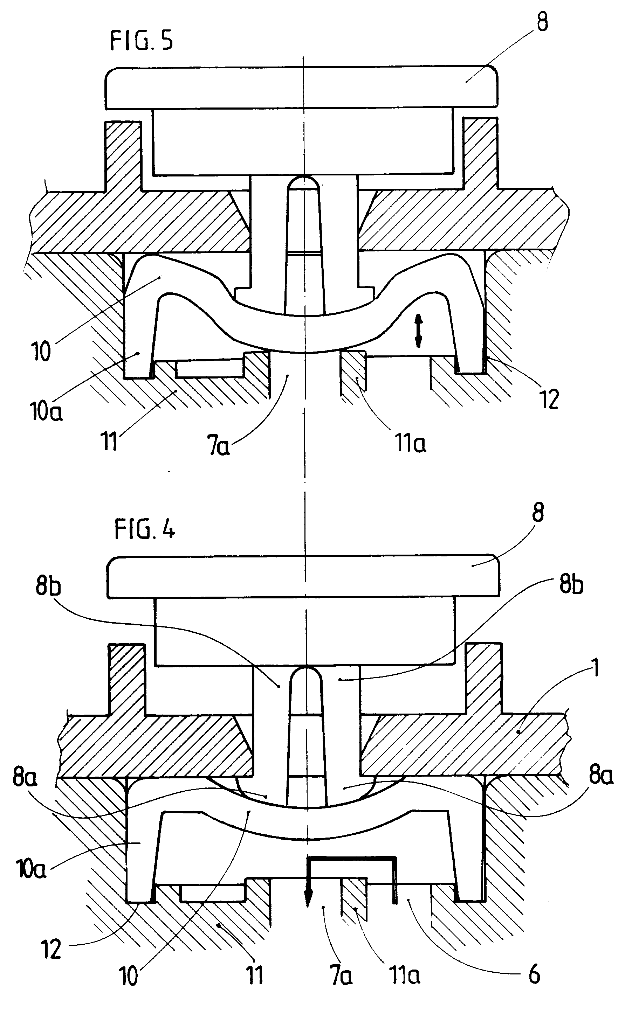

On voit que la chambre 9 est principalement constituée par un espace annulaire entourant ladite collerette 11a. En outre, cette paroi interne 11 comporte une rainure 12 (Figures 4 et 5) entourant ledit espace annulaire et dans laquelle est maintenu le rebord 10a de la coupelle élastique 10.

Comme illustré figures 1 et 4, à l'état de repos du bouton 8, donc si celui-ci n'est pas pressé, la coupelle 10, sous l'effet de sa propre élasticité et de la pression du liquide, s'appuie totalement contre l'extrémité intérieure arrondie 8a du bouton 8 (Figure 4), maintenant celui-ci en position de repos, et contre les faces internes des parois périphériques et internes du boîtier-poignée 1, et dans ces conditions ladite coupelle 10 reste totalement inactive et se comporte comme un élément rigide lors de l'utilisation du portebuse pour le traitement par jet de liquide qui passe selon la flèche de la figure 4. Dans l'exemple considéré la partie interne du bouton 8 est fendue et forme deux bras 8b (figure 4) dont les extrémités arrondies 8a sont en forme de crochets, qui, à l'état de repos, s'appuient contre la paroi interne du boîtier-poignée et limitent le déplacement du bouton vers l'extérieur.

Si l'utilisateur souhaite interrompre momentanément le passage du liquide, il presse le bouton 8, ce qui entraine, comme montré figure 5, la déformation et le déplacement de la coupelle 10, et par conséquent la fermeture progressive du passage du liquide dans l'ouverture 7a de la valve jusqu'au blocage complet de ce passage. Dans cette position de blocage telle qu'illustrée figure 5, la zone centrale de la coupelle est pressée contre la collerette 11a, tandis que la plus grande partie de la coupelle 10 entourant cette zone centrale est écartée des faces internes du boîtier-poignée, ce qui lui permet de se déformer librement sous l'effet des pulsations du liquide, symbolisé par la double flèche de la figure 5, et la chambre 9 peut donc subir une expansion périodique amortissant ces pulsations du liquide et par conséquent soulageant la pompe et le moteur. Si le bouton 8 est relâché, sous l'effet de sa force élastique de rappel et de la pression du liquide dans la chambre 9, la coupelle 10 s'écarte de la collerette 11a et est de nouveau appliquée contre les faces internes du boîtier, poussant le bouton 8 dans sa position de repos.

Dans l'exemple considéré, le corps de la valve 5 et les conduits internes 6 et 7 avec les raccords d'entrée et de sortie 2 et 3 sont formés d'une seule pièce qui est insérée et fixée dans le boitier-poignée 1. Cette pièce comporte en outre aussi des projections 3a pour fixation de la buse 4.

L'invention n'est pas limitée à la forme d'exécution qui vient d'être décrite, mais de nombreuses variantes pourraient être envisagées sans sortir de l'invention.

## Revendications

1. Porte-buse pour soins corporels, notamment buccaux, au moyen d'un jet de liquide pulsé, formé par un boîtier-poignée (1) comprenant un conduit de liquide entre un raccord d'entrée (2) et un raccord de sortie (3) destiné à la fixation d'une buse (4), ainsi qu'une valve (5) installée dans ce conduit et comportant un bouton de commande (8) qui, à l'état de repos, assure l'ouverture de la valve et qui peut être pressé pour diminuer le passage de liquide et, dans sa position pressée finale, fermer la valve, caractérisé en ce que ladite valve (5) comprend une chambre (9) en communication avec la partie amont (6) dudit conduit et reliée à travers l'ouverture (7a) de la valve à la partie aval (7) dudit conduit, ladite chambre (9) étant limitée partiellement par une coupelle (10) élastique déformable par le bouton (8) et qui, à l'état de repos du bouton (8), sous l'effet de sa propre élasticité et de la pression du liquide, reste écartée de l'ouverture (7a) de la valve et est totalement inactive, tandis que, sous l'action du bouton pressé, elle couvre l'ouverture (7a) de la valve (5) pour bloquer le passage du liquide, dans cet état de blocage, la partie de la coupelle (10) entourant l'ouverture (7a) de la valve étant élastiquement déformable sous l'effet des pulsations du liquide tel que ladite chambre subit une expansion périodique amortissant ces pulsations de liquide.

2. Porte-buse selon la revendication 1, caractérisé en ce que ladite chambre (9) est limitée du côté du bouton (8) par ladite coupelle (10) et du côté opposé par une paroi interne (11) dont la zone centrale comporte ladite ouverture (7a) de la valve, l'extrémité intérieure (8a) du bouton (8) se trouvant en contact avec la zone centrale de la face extérieure de la coupelle (10) qui, à l'état de repos, s'appuie contre ce bouton et contre des faces rigides du boîtier et dont la majeure partie, en position de fermeture, est écartée desdites faces.

3. Porte-buse selon la revendication 1, caractérisé en ce que ladite coupelle (10) a la forme d'un pot dont le rebord (10a) est maintenu dans une rainure (12) de ladite paroi interne (11), laquelle comporte dans sa zone centrale une collerette (11a) entourant ladite ouverture (7a) de la valve et servant de siège pour la coupelle (10) dans la position de fermeture de la valve.

4. Porte-buse selon l'une des revendications 1 à 3, caractérisé en ce que le corps de la valve (5) et les conduits internes (6, 7) avec les raccords d'entrée et de sortie (2, 3) sont formés d'une seule pièce insérée et fixée dans la paroi périphérique du boitier-poignée (1), cette pièce comportant de préférence aussi des projections (3a) pour l'attachage de la buse (4).

5. Porte-buse selon l'une des revendications 1 à 4, caractérisé en ce que la partie interne du bouton (8) est fendue en formant deux bras (8b), dont les extrémités (8a) sont arrondies et formées comme des crochets, qui a l'état de repos s'appuient contre la paroi interne du boîtier-poignée et limitent le déplacement du bouton vers l'extérieur.

## Claims

1. A nozzle holder for bodily, in particular oral, care, by means of a jet of pulsed liquid, formed by a casing/handpiece (1) comprising a liquid conduit between an inlet connection (2) and an outlet connection (3) intended for the fixing of a nozzle (4), as well as a valve (5) installed in this conduit and comprising a control button (8) which, in the rest state, assures the opening of the valve and which can be pressed in order to reduce the passage of liquid and, in its final pressed position, closes the valve, characterized in that said valve (5) comprises a chamber (9) which is in communication with the upstream part (6) of said conduit and connected through the opening (7a) of the valve to the downstream part (7) of said conduit, said chamber (9) being delimited partially by an elastic cup (10) which can be deformed by the button (8) and which, in the rest state of the button (8), under the effect of its own elasticity and of the pressure of the liquid, remains moved away from the opening (7a) of the valve and is completely inactive while, under the action of the pressed button, it covers the opening (7a) of the valve (5) to block the passage of the liquid, in this blocked state the part of the cup (10) surrounding the opening (7a) of the valve being elastically deformable under the effect of the pulsations of the liquid such that said chamber undergoes a periodic expansion, damping these liquid pulsations.

2. The nozzle holder as claimed in claim 1, characterized in that said chamber (9) is delimited on the side of the button (8) by said cup (10) and on the opposite side by an internal wall (11), the central zone of which comprises said opening (7a) of the valve, the internal end (8a) of the button (8) being in contact with the central zone of the external face of the cup (10) which, in the rest state, bears against this button and against rigid faces of the casing, and the greater part of which, in the closure position, is moved away from said faces.

3. The nozzle holder as claimed in claim 1, characterized in that said cup (10) has the form of a pot, the rim (10a) of which is held in a groove (12) of said internal wall (11) which comprises in its central zone a collar (11a) surrounding said opening (7a) of the valve and serving as a seat for the cup (10) in the closure position of the valve.

4. The nozzle holder as claimed in claim 1, characterized in that the body of the valve (5) and the internal conduits (6, 7) with the inlet and outlet connections (2, 3) are formed by a single piece which is inserted and fixed into the peripheral wall of the casing/handpiece (1), this piece preferably also comprising projections (3a) for attaching the nozzle (4).

5. The nozzle holder as claimed in claim 1, characterized in that the internal part of the button (8) is split, forming two arms (8b), the ends of which are rounded and formed as hooks which, in the rest state, bear against the internal wall of the casing/handpiece and limit the displacement of the button towards the outside.

## Patentansprüche

1. Düsenhalter zur Körperpflege, insbesondere zur Mundpflege, mittels eines pulsierenden Flüssigkeitsstrahls, wobei dieser Düsenhalter von einem Gehäuse in Form eines Handstücks (1) gebildet wird, mit einer Flüssigkeitsleitung zwischen einem Eingangsanschluss (2) und einem zur Befestigung einer Düse (4) bestimmten Ausgangsanschluss sowie mit einem in dieser Leitung installierten Ventil (5), das einen Bedienungsknopf (8) aufweist, der im Ruhezustand die Oeffnung des Ventils gewährleistet und welcher zur Verringerung des Flüssigkeitsdurchflusses gedrückt werden kann und in seiner eingedrückten Endstellung das Ventil schliesst, dadurch gekennzeichnet, dass das erwähnte Ventil (5) eine Kammer (9) aufweist, die mit dem stromaufwärts liegenden Teil (6) der erwähnten Leitung in Verbindung steht und über die Oeffnung (7a) des Ventils mit dem stromabwärts liegenden Teil (7) der erwähnten Leitung verbunden ist, dass die erwähnte Kammer (9) teilweise durch eine elastische Schale (10) begrenzt ist, welche durch den Knopf (8) verformbar ist und im Ruhezustand des Knopfes (8) unter der Wirkung ihrer Eigenelastizität und des Flüssigkeitsdruckes von der Oeffnung (7a) des Ventils entfernt bleibt und vollkommen inaktiv ist, während sie unter der Wirkung des gedrückten Knopfes die Oeffnung (7a) des Ventils (5) abdeckt, um den Flüssigkeitsdurchfluss zu sperren, wobei in diesem Sperrzustand der die Oeffnung (7a) des Ventils umgebende Teil der Schale (10) unter der Wirkung der Flüssigkeitsimpulse elastisch verformbar ist, derart, dass die erwähnte Kammer einer periodischen Ausdehnung unterworfen ist, welche diese Flüssigkeitsimpulse dämpft.

2. Düsenhalter nach Anspruch 1, dadurch gekennzeichnet, dass die erwähnte Kammer (9) auf der Seite des Knopfes (8) durch die erwähnte Schale (10) und auf der gegenüberliegenden Seite durch eine innere Wand (11) begrenzt ist, deren zentraler Bereich die erwähnte Oeffnung (7a) des Ventils aufweist, und dass das innere Ende (8a) des Knopfes (8) sich in Berührung mit dem zentralen Bereich der äusseren Fläche der Schale (10) befindet, welche sich im Ruhezustand gegen diesen Knopf und gegen die starren Flächen des Gehäuses abstützt und deren grösster Teil in Schliessstellung von den erwähnten Flächen entfernt ist.

3. Düsenhalter nach Anspruch 1, dadurch gekennzeichnet, dass die erwähnte Schale (10) die Form eines Topfes hat, dessen Rand (10a) in einer Nut (12) der erwähnten inneren Wand (11) gehalten wird, und dass diese innere Wand (11) in ihrem zentralen Bereich einen die erwähnte Oeffnung (7a) des Ventils umgebenden Bund (11a) aufweist der in der Schliessstellung des Ventils als Sitz für die Schale (10) dient.

4. Düsenhalter nach einem der Ansprüche 1 bis 3, dadurch gekennzeichnet, dass der Körper des Ventils (5) und die inneren Leitungen (6, 7) mit den Eingangs- und Ausgangsanschlüssen (2, 3) aus einem einzigen Teil gebildet sind, welches in der Umfangswand des Handstücks (1) eingesetzt und befestigt ist, wobei dieses Teil vorzugsweise auch Vorsprünge (3a) zur Befestigung der Düse (4) aufweist.

5. Düsenhalter nach einem der Ansprüche 1 bis 4, dadurch gekennzeichnet, dass der innere Teil des Knopfes (8) unter Bildung zweier Arme (8b) geschlitzt ist, deren Enden (8a) abgerundet und als Haken geformt sind, welche im Ruhezustand an der inneren Wand des Handstücks anliegen und die Verschiebung des Knopfes nach aussen begrenzen.
